# EUROPEAN PATENT APPLICATION

(11) **EP 1 134 009 A2**
(43) Date of publication of application: **19.09.2001**
(21) Application number: 00310558.2
(22) Date of filing: 29.11.2000
(51) Int. Cl.: A63F 13/10

(54) **Three-dimensional interactive game system and advertising system using the same**

(30) Priority: 07.03.2000 JP 2000061996
(71) Applicant: FUJITSU LIMITED, Kawasaki-shi, Kanagawa 211-8588 (JP)
(72) Inventor: Arai, Masatoshi, Kawasaki-shi, Kanagawa 211-8588 (JP); Murakami, Koichi, Kawasaki-shi, Kanagawa 211-8588 (JP)
(74) Representative: Stebbing, Timothy Charles

(57) **Abstract**

Data regarding an advertising object is input through a three-dimensional polygon data input part 31 and an attribute input part 32. A character management part 20 manages characters appearing in a game provided by a game story providing part 10. A polygon assignment part 41 assigns three-dimensional polygon data of the advertising object to the game character, and an attribute reflecting part 42 reflects attributes and performance of the advertising object on the game character, whereby the advertising object is reproduced as the game character in a three-dimensional virtual space. A user performs a game on a display part 70 through a game performing part 50. A story development control part 60 dynamically sets and changes an evaluation value assigned to each scene and develops a story, thereby allowing the user to virtually experience the attributes and performance of the advertising object. For example, the game may be a driving game in which the user drives a new car model as the advertising object.

## Description

The present invention relates to a three-dimensional interactive game system, which allows a user to play a game by an interactive manipulation, using a three-dimensional character assigned a plurality of three-dimensional polygon data, the polygon data being contained in data downloaded to a user's digital image transmitting/receiving apparatus through a network medium capable of transmitting/ receiving a digital image, such as the Internet and a digital TV. In particular, the present invention relates to a three-dimensional interactive game system which advertises one or more objects by featuring them as characteristics or items within the game. An advertising system using the game system, as well as a program (which may be recorded on a storage medium) for implementing the system, are also provided.

With the widespread use of a network system for transmitting/receiving digital data, such as the Internet and a digital TV, and the advancement of a multi-media processing technique, as in the World-Wide Web system, a computer technique allowing a user to capture digital data from the network and display it on a display device has been extensively developed. As the number of users of the Internet increases, the appealing power of such a network medium is becoming large, so that its use as an advertising medium has been started.

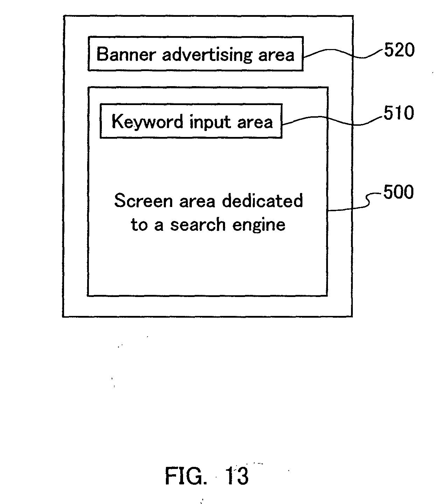

Figure 13 illustrates an idea of the prior art in which an advertisement is displayed on a screen of a search engine used on the Internet. A search engine is often used on the Internet as a portal for initial connection. Reference numeral 500 denotes a screen area dedicated to a search engine, 510 denotes a keyword input area in which a user inputs a keyword for finding a user's desired site and a keyword regarding the content of user's interest, and 520 denotes an advertisement area. In the present example, although the advertisement area 520 is provided in an upper portion of a screen, it may be provided in a lower portion of the screen. Advertisements are not the intended use of a search engine, so that advertising letters are generally displayed in a small area having a button shape. The advertisement displayed in a portion of the screen is called a banner advertisement.

The banner advertisement of the prior art is mainly displayed as letters in a small area having a button shape for a predetermined period of time (e.g., 10 seconds), and is often rotated with other advertisements. Furthermore, in the prior art, for the purpose of attracting attention, it is attempted to provide an eye-catching display such as simple animation processing (e.g., rotation and movement of letters), gradation, and flashing, in addition to a static text. Furthermore, the banner advertisement is not merely a message for attracting attention. The display area also is a button that is linked to a homepage of an advertisement provider. When a user finds a banner advertisement and is attracted to it, the user presses the button with a pointing device such as a mouse, whereby the user is connected to a homepage of an advertisement provider.

The banner advertisement of the prior art is provided, based on the fact that a number of users are likely to see a search engine screen on the Internet. However, the main function of the banner advertisement lies in presenting a button linked to a homepage of an advertisement provider to a user (i.e., connection to a homepage of an advertisement provider), rather than in advertising any particular article. Therefore, although the banner advertisement is conspicuous as an eye catcher, it is merely displayed as a message for letting a user know a link destination of a homepage.

Thus, the banner advertisement of the prior art has some problems. Firstly, the banner advertisement of the prior art cannot advertise appealing contents such as advantageous points and a function of an advertising article. The banner advertisement is merely a message or logo that lets a user know a link destination of a homepage, so that an advertisement provider cannot provide an advertisement of an article directly to a user by using the banner advertisement. Unless a user clicks on an icon of the banner advertisement for connection to a homepage, an article itself cannot be advertised.

Secondly, with the banner advertisement of the prior art, even if a user is attracted to an advertised article, the user cannot get information on the article unless the user clicks on an icon of the banner advertisement for connection to a homepage. Furthermore, a user who is trying to find another site by using a search engine may be sidetracked into connection to a homepage of an advertisement provider of the banner advertisement, thereby incurring extra time and costs on the way to a target site. Accordingly, it is unrealistic to expect that many users will access a homepage of a banner advertisement provider.

Thirdly, according to the banner advertisement of the prior art, only two-dimensional words or signs are displayed, which let a user know a link destination of a homepage, and an advertising object itself cannot be displayed three-dimensionally. Therefore, the advertising information amount is very small. According to advertisement using a TV or a pamphlet, it is possible to allow the advantageous points of attributes of an advertising article to appeal to users, whereas the banner advertisement of the prior art merely displays a connection site and cannot advertise an article itself. Furthermore, in the case of articles displayed in an actual shop, a user can pick up the articles to confirm the attributes thereof such as a function and performance.

In view of the above, it would be ideal if an advertising article could be displayed three-dimensionally, and could allow a user to perform an interaction or manipulation with the article in a virtual reality-like manner.

Therefore, with the foregoing in mind, an embodiment of the present invention may provide an advertising system using a three-dimensional interactive game system, which displays an advertising article three-dimensionally, allows a user to perform an interactive manipulation close to virtual reality, and in which the display of the advertising article contains a great amount of advertising information. This system allows a user to interactively experience the advertising article in a three-dimensional virtual space, provides a user with an incentive to spend time learning about the advertising article, and dynamically adjusts a method for providing an advertisement in accordance with user's inclination.

An embodiment of the present invention may also provide an advertising system using a three-dimensional interactive game system that does not inhibit the use of a digital image transmitting/receiving apparatus (user's main purpose), and allows a user to naturally recognize, and see and hear an advertising object.

Furthermore, an embodiment of the present invention may provide an advertising system using a three-dimensional interactive game system that gives an advertisement without requiring a connection to a network, unlike a connection to a homepage via the banner advertisement of the prior art.

Still further, a three-dimensional interactive game system embodying the present invention may include a three-dimensional character, which has predetermined attributes and is assigned a plurality of three-dimensional polygon data, so that the three-dimensional character replaces an object to be displayed as a character in an interactive game, wherein a user is allowed to perform an interactive manipulation through a user interface, using the three-dimensional character that replaces the object in the interactive game, thereby playing the game.

Because of the above-mentioned structure, a three-dimensional character, which has predetermined attributes and is assigned a plurality of three-dimensional polygon data, is three-dimensionally displayed so as to replace an object to be displayed as a character in an interactive game, and a user is allowed to perform an interactive manipulation close to virtual reality (such as driving a car in a driving simulation) and to experience the three-dimensional character having the attributes in a three-dimensional virtual space through a game operation (e.g. characteristics of the car). The object is intended to express a character appearing in the interactive game, and by assigning specific three-dimensional polygon data and attributes of the object to the character, a game character having a specific outer appearance and attributes can be obtained from the object.

A first advertising system using a three-dimensional interactive game system of the present invention includes: a setting part for setting a three-dimensional advertising character in an interactive game, which has predetermined attributes and which is assigned three-dimensional polygon data of an advertising object, as a game character in a three-dimensional virtual space (acting as a "stage set" in which the game takes place); and a game performing part for allowing a user to interactively manipulate the three-dimensional advertising character through a user interface, wherein the advertising object is advertised by allowing the user to virtually experience the advertising object in the three-dimensional virtual space.

Because of the above-mentioned structure, an advertising article is three-dimensionally displayed, a user controls the article in some way within a VR-like environment, the advertising information amount of the advertising object is increased through a game operation, and the user can interactively experience the advertising object in a three-dimensional virtual space. If the advertising system of the present invention is placed in a shop, the advertising article can be effectively advertised, which leads to the enhancement of service to (and interest from) customers.

A second advertising system using a three-dimensional interactive game system of the present invention includes: a game story providing part for, in a case where there are a plurality of selectable scenes to be developed after a certain scene, providing an interactive game story in which a next scene is determined based on an evaluation value of the certain scene for evaluating which scene is to be developed next; a character management part for managing characters appearing in a game; a three-dimensional polygon data input part for inputting three-dimensional polygon data of an advertising object; a three-dimensional advertising character generating part for generating a three-dimensional advertising character, provided with a polygon assignment part for assigning the three-dimensional polygon data of the advertising object to a character selected from the characters managed by the character management part; a story development control part for dynamically setting an evaluation value to be assigned to each scene in a development of a game story; and a game performing part for performing a game through a user interface, wherein the story development control part dynamically sets an evaluation value of a scene, in which the three-dimensional advertising character appears, to be higher than an evaluation value of a scene in which the three-dimensional advertising character does not appear, and the scene including the advertising object is preferentially displayed and advertised to a game user.

Because of the above-mentioned structure, a user can naturally recognize, and see and hear an advertising object as a game character, while enjoying an interactive game as a main purpose. Furthermore, the development of a game story can be dynamically induced (constructed) to obtain a scene in which selling points of the advertising object are emphasized, whereby the advertising object can be effectively displayed and advertised.

In the case where there are a plurality of advertising objects, it is preferable that the advertising system using a three-dimensional interactive game system of the present invention includes: an advertising ratio input part for inputting advertising ratios of the respective advertising objects; and an advertising amount comparing part for detecting advertising amounts of the respective advertising objects and comparing them with each other, wherein the three-dimensional polygon data input part is used for inputting three-dimensional polygon data of the plurality of advertising objects, the three-dimensional advertising character generating part assigns the three-dimensional polygon data of the advertising objects to each selected character to generate respective three-dimensional advertising characters, the advertising amount comparing part compares the advertising amounts of scenes with each other in which the three-dimensional advertising characters appear, and the story development control part dynamically adjusts evaluation values of the scenes in which the three-dimensional advertising characters appear so that the compared advertising amounts of the advertising objects become close to the advertising ratios.

Because of the above-mentioned structure, in the case where there are a plurality of advertising objects, each advertising object can be advertised with an appropriate balance (i.e. in desired proportions of time and/or size) so that the advertising amount of each advertising object becomes close to a set advertising ratio.

Furthermore, the second advertising system using a three-dimensional interactive game system of the present invention may include an attribute input part for inputting attributes of the advertising object, the three-dimensional advertising character generating part including an attribute reflecting part for reflecting the input attributes of the advertising object on attributes of the three-dimensional advertising character, whereby the game user is allowed to virtually experience the attributes of the advertising object, and advantageous points of the advertising object can appeal to the game user.

Furthermore, in the advertising system using a three-dimensional interactive game system of the present invention, it is preferable that a three-dimensional advertising character and a comparative character that belong to the same category appear in the game story provided by the game story providing part, the game story including a comparative advertising scene showing advantageous points of the three-dimensional advertising character, which is a difference between the three-dimensional advertising character and the comparative character, the three-dimensional polygon data input part is used for inputting three-dimensional polygon data of an advertising object and three-dimensional polygon data of a comparative object, the attribute input part is used for inputting attributes of the advertising object and attributes of the comparative object, the character generating part uses the polygon assignment part to assign the three-dimensional polygon data of the advertising object to a character to form a three-dimensional advertising character, and to assign the three-dimensional polygon data of the comparative object to a character to form a three-dimensional comparative character; and the character generating part uses the attribute reflecting part to reflect the input attributes of the advertising object on attributes of the three-dimensional advertising character, and to reflect the input attributes of the comparative object on attributes of the three-dimensional comparative character, and the story development control part dynamically sets the comparative advertising scene at a higher value, thereby preferentially displaying and advertising the advantageous points of the advertising object to the game user.

Because of the above-mentioned structure, a user can experience an advertising object in a three-dimensional interactive manner in relation to a comparative object, and the advantageous points of the advertising object can appeal to users.

Furthermore, the above-mentioned advertising system may include an advertising action knowledge accumulating part for accumulating an advertising action to be performed by the three-dimensional advertising character as knowledge, wherein a scene for advertising the advertising object is autonomously generated, using knowledge in the advertising action knowledge accumulating part. Because of this, an advertising system can be efficiently constructed without giving detailed setting and instructions.

Furthermore, the above-mentioned advertising system includes: an advertising cooperation action setting part for setting a predetermined manipulation using the three-dimensional advertising character as an advertising cooperation action; and a prize providing part for determining an amount of a prize to be provided, in accordance with a performing state of the set advertising cooperation action, and providing the prize, wherein the prize is used as an incentive to allow a user to perform the advertising cooperation action through a manipulation of the three-dimensional advertising character, and to allow the user to experience the advertising object assigned to the three-dimensional advertising character.

Furthermore, the above-mentioned advertising system includes a user's inclination detecting part for detecting user's inclination, wherein the story development control part dynamically changes a development of a story based on the detected user's inclination (e.g. skill level). Because of this, advertising can be performed taking the user's inclination into account.

These and other advantages of the present invention will become apparent to those skilled in the art upon reading and understanding the following detailed description with reference to the accompanying figures, in which:-
Figure 1 is a block diagram showing a schematic structure of an advertising system using a three-dimensional interactive game system in Embodiment 1 according to the present invention.
Figure 2 illustrates an idea of dynamic setting of an evaluation value assigned to each scene and a state where scenes are being developed by a story development control part.
Figure 3 is a flow chart showing an operation of an advertising system using a three-dimensional interactive game system in Embodiment 1 according to the present invention.
Figure 4 schematically shows a state where a three-dimensional advertising character of a car model to be advertised is generated.
Figure 5 is a block diagram showing a schematic structure of an advertising system using a three-dimensional interactive game system in Embodiment 2 according to the present invention.
Figure 6 shows a state where the advertising amount of an advertising object is set and changed so as to be close to an advertising ratio, whereby a story is induced.
Figure 7 is a block diagram showing a schematic structure of an advertising system using a three-dimensional interactive game system in Embodiment 3 according to the present invention.
Figure 8 is a flow chart showing exemplary processing of a comparative advertisement by an advertising system using a three-dimensional interactive game system in Embodiment 3 according to the present invention.
Figure 9 is a block diagram showing a schematic structure of an advertising system using a three-dimensional interactive game system in Embodiment 4 according to the present invention.
Figure 10 is a block diagram showing a schematic structure of an advertising system using a three-dimensional interactive game system in Embodiment 5 according to the present invention.
Figure 11 is a block diagram showing a schematic structure of an advertising system using a three-dimensional interactive game system in Embodiment 6 according to the present invention.

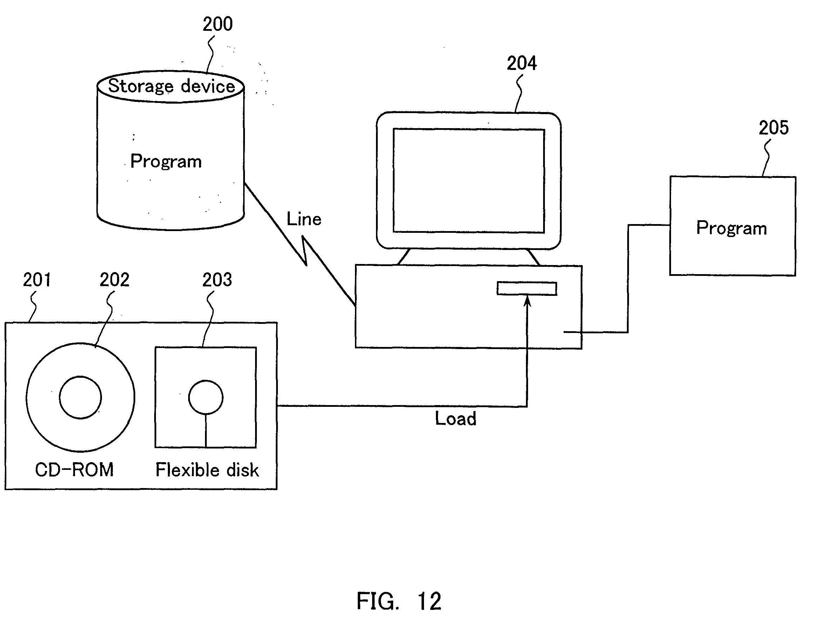

Figure 12 shows an example of a recording medium on which a processing program of an advertising system using a three-dimensional interactive game system in Embodiment 8 according to the present invention is recorded.
Figure 13 illustrates an idea for displaying an advertisement on a search engine screen used on the Internet in the prior art.

### Embodiments

Hereinafter, a three-dimensional interactive game system of the present invention and an advertising system using the same will be described. In this embodiment, an advertising system will be exemplified, in which three-dimensional polygon data of a plurality of advertising objects having predetermined attributes are assigned to characters of an interactive game so that the characters take on the appearance, as well as other properties of the advertising objects, and a user experiences the three-dimensional advertising characters by playing a game in the interactive game system. Needless to say, the present invention is not limited to a three-dimensional advertising character. The present invention is also applicable to a system that provides a user with virtual experience of an object, such as those used in an education system (e.g., a human body model for medical education, a car model for a driving instruction).

Herein, a character is intended to include any kind of product or article such as a car, a TV, and juice. The term "character" includes some kind of representation (which may be stylised) of the item being advertised.

### Embodiment 1

An advertising system using a three-dimensional interactive game system in Embodiment 1 displays an advertising article in a three-dimensional manner, allows a user to perform an interactive manipulation close to virtual reality, and increases the advertising information amount of the advertising object. The advertising system provides a user with an interactive game, in which the user can naturally recognize an advertising object as a character of the game while enjoying the game, and a game story is dynamically induced (developed or influenced) so that the user sees the character as many times as possible. Thus, the advertising system effectively displays and advertises an advertising object. For example, if the advertising system is placed in a shop, articles for sale can be effectively advertised, which leads to the enhancement of service for customers, improving their level of knowledge of, or interest in, the advertised objects (products).

The advertising system will be described assuming that an advertising object is a particular car model "b" of an advertisement provider.

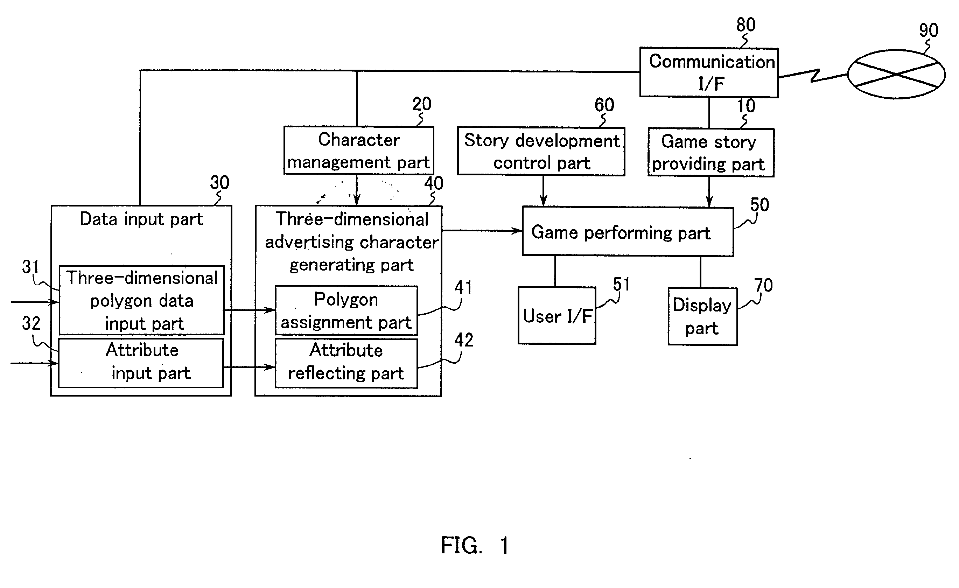

Figure 1 is a block diagram showing a schematic structure of an advertising system using a three-dimensional interactive game system in Embodiment 1 according to the present invention. In actual implementation, the components of the advertising system may be composed of dedicated devices. It may also be possible that processing steps are described as computer software using a CPU, a memory, and the like.

In Figure 1, reference numeral 10 denotes a game story providing part, 20 denotes a character management part, 30 denotes a data input part, 31 denotes a three-dimensional polygon data input part, 32 denotes an attribute input part, 40 denotes a three-dimensional advertising character generating part, 41 denotes a polygon assignment part, 42 denotes an attribute reflecting part, 60 denotes a story development control part, 50 denotes a game performing part, 51 denotes a user interface (I/F), 70 denotes a display part, 80 denotes a communication interface (I/F), and 90 denotes a network. In Figure 1, a CPU, a memory, and various devices required for controlling a computer system are not shown. Each component of the advertising system using a three-dimensional interactive game system may be a dedicated device, or a library describing the processing steps thereof as software.

The game story providing part 10 provides an interactive game story in which, in the case where there are a plurality of scenes to be developed after a certain scene, a next scene is determined in accordance with an evaluation value (e.g. result or score) of the certain scene for evaluating which scene is to be developed next. The game story providing part 10 includes a game memory. There is no particular limit to a game provided by the game story providing part 10; however, if the game story providing part 10 provides a game that is attractive to a user, the user is motivated to use the advertising system. It is possible that a plurality of games are prepared. In this case, a user may be allowed to select a preferred game from a game menu. The game story providing part 10 may previously store games in a game memory. Alternatively, the game story providing part 10 may have a structure in which a game is downloaded from the network 90 through the communication interface 80 in accordance with the user's selection from a game menu.

The character management part 20 manages a character that appears in a game. The character managed by the character management part 20 is previously set in a game. It will be appreciated that there may be a plurality of characters. Data regarding an advertising article is assigned to a selected character by the polygon assignment part 41 and the attribute reflecting part 42, as described later.

The data input part 30 is used for inputting data regarding an advertising object, and includes the three-dimensional polygon data input part 31 for inputting three-dimensional polygon data of an advertising object and an attribute input part 32 for inputting an attribute of the advertising object. Herein, three-dimensional polygon data also contains texture data. Furthermore, herein, attributes include characteristics, a function, properties based on material, color, weight, etc. of the advertising object. Assuming that a character is a car, a shape, color, and the like are input as three-dimensional polygon data, and fuel economy of an engine, brake performance including the presence/absence of an ABS (anti-lock brake system), characteristics of mounted audio equipment, and the like are input as attributes. Data of a plurality of objects to be advertised may be previously registered. For example, in the case of advertisement of a car, a plurality of car models to be advertised may be prepared.

The three-dimensional advertising character generating part 40 includes the polygon assignment part 41 and the attribute reflecting part 42. The character generating part 40 generates a three-dimensional advertising character of an advertising object in a three-dimensional virtual space by assigning three-dimensional polygon data to a character selected from those managed by the character management part 20 (shape adjustment) and reflecting attribute information on the selected character (attribute adjustment). The polygon assignment part 41 assigns three-dimensional polygon data, which is selected from the advertising object, to the selected character. The attribute reflecting part 42 reflects input attributes of the advertising object on those of the three-dimensional character assigned three-dimensional data by the polygon assignment part 41. Because of the character assignment processing and attribute reflection processing, the advertising object is reproduced as a three-dimensional advertising character in a three-dimensional virtual space. Thus, according to the advertising system of the present invention, a three-dimensional advertising character can be provided, so that the advertising information amount becomes much larger than that of the banner advertisement of the prior art based on a two-dimensional text. Furthermore, the advertising object is reproduced as a three-dimensional advertising character, so that a user can virtually experience the advertising object through the three-dimensional advertising character in a three-dimensional virtual space.

The game performing part 50 is a controller for executing read of a game from a game memory. More specifically, the game performing part 50 performs a game provided by the game story providing part 10 based on a user manipulation. The game performing part 50 includes a user interface 51 such as a mouse, a keyboard, a joystick, and a voice input device.

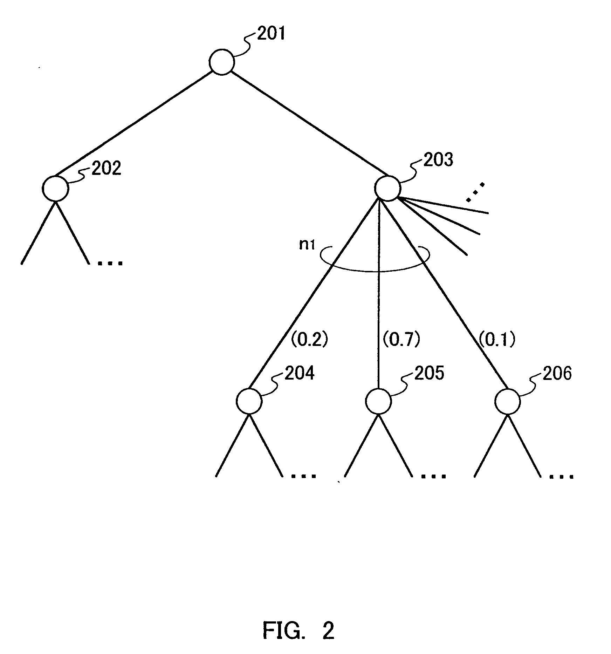

The story development control part 60 dynamically sets an evaluation value assigned to each scene in development of a game story. Figure 2 illustrates an idea of dynamically setting an evaluation value assigned to each scene by the story development control part 60. In Figure 2, each node corresponds to each scene provided by the story providing part 10, and each branching shows a state where a story is being developed. Each branch from each node represents a path to a next scene to be developed. Each branch is classified on the basis of user's input action, and a numerical value on the side of each branch represents an evaluation value assigned to each scene. The story development control part 60 dynamically sets and changes evaluation values. Regarding the development of a story, a node (i.e., a next scene) from a certain node is selected based on user's action and an evaluation value assigned to each branch. The description will be made later regarding the state where the story is being developed and the state where the story is influenced by dynamic setting and change in evaluation values.

The display part 70 displays a stage set (game setting or background) and a character in a virtual space of a three-dimensional interactive game, and the movement of the character. The display part 70 includes various kinds of devices required for display such as a monitor as a display device.

The communication interface 80 includes various kinds of devices and communication software required for controlling a data input/output with respect to the network 90, and enables data to be input/output in accordance with a predetermined protocol on the network 90.

The network 90 is the Internet or the like.

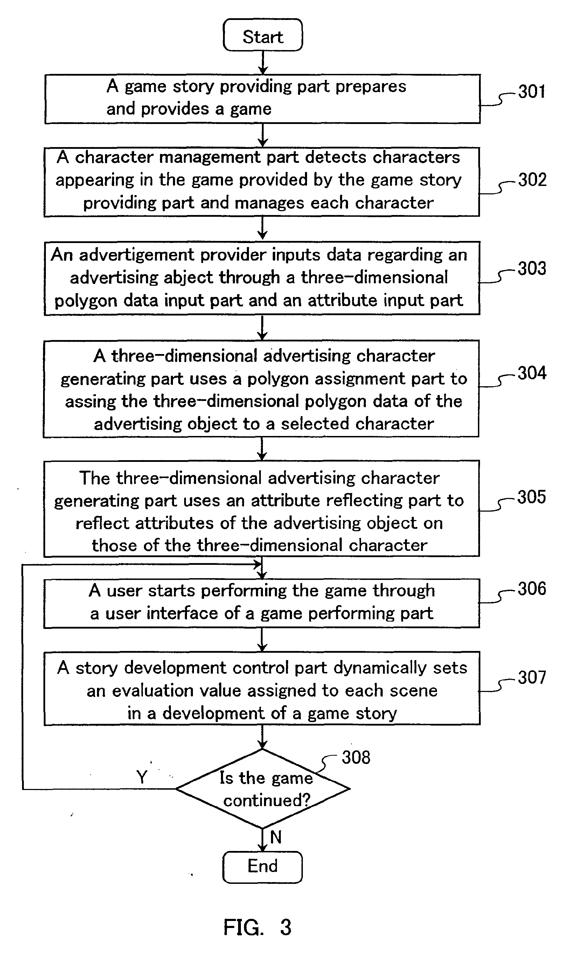

Next, the operation of the advertising system using a three-dimensional interactive game system according to the present invention shown in Figure 1 will be described with reference to a flow chart in Figure 3. In the following example, it is assumed that the advertising system is placed in a car dealer, an advertising object is a car of a particular car model "b" and a game is prepared in which a car appears. For example, it is assumed that a user drives a car of the particular car model "b" on a three-dimensional virtual street, and chases and catches an artificial creature that is a mascot character of the car of the particular car model "b".

First, the game story providing part 10 prepares games (Operation 301). For example, a user selects a desired game from a game menu displayed on the display part 70. The selected game is downloaded by the user from the network 90 through the communication interface 80. In this example, it is assumed that games are prepared in which cars appear in a game menu, and a game is selected by a user and downloaded from the network 90. The game story providing part 10 stores the downloaded game in the game memory and provides the game by using the game memory and the game performing part 50.

Next, the character management part 20 detects characters to be used in the game provided by the game story providing part 10, and manages each character (Operation 302). In this example, it is assumed that car characters "A" and "B" are selected as those appearing in the game provided by the game story providing part 10.

Next, an advertisement provider inputs data regarding advertising objects through the three-dimensional polygon data input part 31 and the attribute input part 32 for inputting attributes of the advertising objects (Operation 303). In this example, three-dimensional polygon data (containing texture data) such as the shape and color of a plurality of car models "a" to "c" that are to be advertising objects are input through the three-dimensional polygon data input part 31. Furthermore, attribute information of the car models "a" to "c" such as fuel economy of an engine, brake performance, and characteristics of mounted audio equipment, is input through the attribute input part 32. It is assumed that the car model "b" has high brake performance due to the use of an ABS.

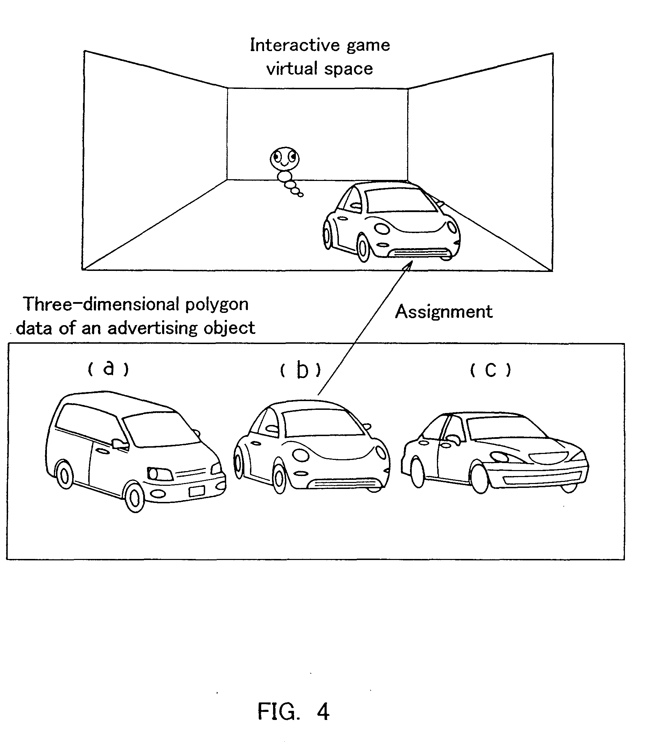

Next, the polygon assignment part 41 determines a car model to be assigned to a selected character, and assigns three-dimensional polygon data of the car model to the character (Operation 304). In Operation 304, the outer appearance of the selected character becomes that of the selected advertising object. In this example, it is assumed that the character "A" and the car model "b" are selected. More specifically, the three-dimensional polygon data, the texture data, and the like of the car model "b" are assigned to the character "A" and the outer appearance of the character "A" becomes that of the car model "b". Figure 4 schematically shows the state where a three-dimensional advertising character of the car model "b" is generated in Operation 304. There are default characters before car models are assigned thereto in an interactive game virtual space. In this example, there are three car models "a" to "c" as three-dimensional polygon data of advertising objects, and the three-dimensional polygon data of the car model "b" is selected and assigned to the default character in the interactive game virtual space.

Next, the attribute reflecting part 42 reflects (imposes) the attributes of the advertising object on those of the three-dimensional character (Operation 305). In Operation 305, the attributes of the selected character become those of the advertising object, and the character has the outer appearance and attributes of the advertising object, whereby the advertising object is reproduced in the three-dimensional virtual space. Herein, the attribute information of the car model "b", such as fuel economy of an engine, brake performance, and characteristics of mounted audio equipment, are assigned to the character "A". It is assumed that the car model "b" has high brake performance due to ABS. The car model "b" is reproduced as a three-dimensional advertising character in the three-dimensional virtual space. Since the car model "b" is reproduced as a three-dimensional advertising character as described above, a user can virtually experience the car model "b" that is the advertising object through the three-dimensional advertising character in the three-dimensional virtual space.

Next, a user starts playing a game through the user interface 51 (Operation 306). The selected game is started, and a user plays the game through the user interface 51 such as a mouse. A three-dimensional virtual space that is to be a stage set of the game is displayed on the display part 70, and various characters appear and behave in accordance with the progress of the game.

Next, the story development control part 60 dynamically sets an evaluation value assigned to each scene in development of a game story (Operation 307). A story is induced to (constructed around) the scenes in which the character assigned three-dimensional data of an advertising medium appears. This state will be described with reference to Figure 2. It is assumed that the current story has reached a node 203. Among the nodes shown in Figure 2, a node 205 represents a scene in which the artificial creature suddenly cuts across an intersection, and other nodes represent scenes in which the artificial creature does not appear. Herein, the story development control part 60 controls so that a scene in which the artificial creature appears is provided as a next scene, and dynamically increases the evaluation value of the branch with respect to the node 205 to 0.7, for example. Herein, in the case where user's action is n1 at the node 203, the evaluation values assigned to the nodes 204, 205, and 206 are 0.2, 0.7, and 0.1, respectively, so that the scene represented by the node 205 will be shown next.

At the node 205, a user chases the artificial creature, so that the user is likely to step on the brake, trying to suddenly turn at an intersection. If the user steps on the brake, the user can experience the ABS function provided as part of the brake system of the actual car model "b", in a virtual driving process in a three-dimensional virtual space.

The story development control part 60 controls the development of a game story in Operation 307.

As described above, the advertising system using a three-dimensional interactive game system in Embodiment 1 displays an advertising article in a three-dimensional manner, allows a user to interact with the article in a manner similar to virtual reality, and increases the advertising information amount of the advertising object. The advertising system provides a user with an interactive game, in which the user can learn about an advertising object in a natural way as a character of the game while enjoying the game, and the development of a game story is dynamically determined so that there are many scenes in which the user can experience the advantageous points of the three-dimensional advertising character. Thus, the advertising system effectively displays and advertises an advertising object.

### Embodiment 2

In Embodiment 2, the case will be described where there are a plurality of advertising objects in the advertising system using a three-dimensional interactive game system according to the present invention. The advertising system in Embodiment 2 includes an advertising ratio input part for inputting advertising ratios of the respective advertising objects. A three-dimensional polygon data input part is used for inputting three-dimensional polygon data of the advertising objects, and a three-dimensional advertising character generating part generates the advertising objects as three-dimensional advertising characters in a three-dimensional virtual space. A story development control part dynamically adjusts an evaluation value of each scene in which characters assigned the advertising objects appear so that the actual advertising amount of each object approaches a preset ratio (advertising ratio). Thus, the advertising system effectively displays and advertises all of the advertising objects to a game user, without neglecting any of the objects.

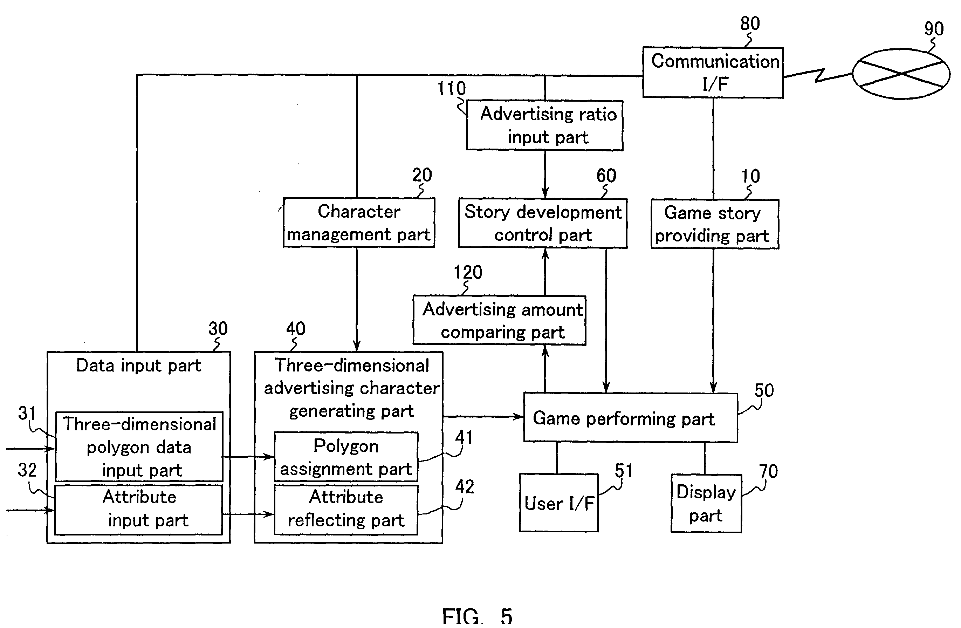

Figure 5 is a block diagram showing a schematic structure of the advertising system using a three-dimensional interactive game system in Embodiment 2 according to the present invention. In actual implementation, the components of the advertising system may be composed of dedicated devices. It may also be possible that processing steps are described as computer software using a CPU, a memory, and the like.

As shown in Figure 5, in addition to the game story providing part 10, the character management part 20, the data input part 30, the three-dimensional polygon data input part 31, the attribute input part 32, the three-dimensional advertising character generating part 40, the polygon assignment part 41, the attribute reflecting part 42, the story development control part 60, the game performing part 50, the display part 70, the communication interface 80, and the network 90, the advertising system in the present embodiment includes an advertising ratio input part 110 and an advertising amount comparing part 120. In Figure 5, a CPU, a memory, and various devices required for controlling a computer system are not shown. Each component of the advertising system using a three-dimensional interactive game system may be a dedicated device, or a library describing the processing steps thereof as software.

The advertising ratio input part 110 is used for inputting advertising ratios of the respective advertising objects in the case where there are a plurality of advertising objects. An advertising ratio refers to a numerical value indicating the degree to which a user sees an advertising object. As an advertising ratio becomes higher, the degree to which the object is presented becomes higher. By setting an advertising ratio, the following are made possible. For example, in the case where there is an object that is desired to be emphasized among a plurality of advertising objects, the ratio of the advertising amount of the object can be increased, and in the case where there are a plurality of advertisement providers, the ratios of the advertising amounts among them can be determined. There is also an advantage in that the advertising amounts of the respective advertising objects can be set with an appropriate balance in accordance with the advertising ratios. If only an advertising priority is set, an advertising object with the highest priority is preferentially displayed, while the other advertising objects are not expected to be displayed. According to the advertising system using a three-dimensional interactive game system in Embodiment 2, in order to advertise each advertising object with an appropriate balance, the ratios of the respective advertising amounts are set.

The advertising amount comparing part 120 detects and compares the advertising amount that indicates how long or how often a scene displaying each advertising object is displayed and advertised in the development of a game story. Herein, the advertising amount can be detected based on the number of scenes in which an advertising object has been displayed or based on the display time of the advertising object. Furthermore, as one method for detecting an appealing degree to a user, a product of a display area and a display time on a display screen can be determined as the advertising amount.

Furthermore, in Embodiment 2, since there are a plurality of advertising objects, each element is adapted to deal with a plurality of advertising objects. The data input part 30 receives an input of data on a plurality of advertising objects.

The three-dimensional advertising character generating part 40 generates the respective three-dimensional advertising characters. More specifically, the polygon assignment part 41 assigns three-dimensional polygon data to characters selected with respect to the respective advertising objects. Furthermore, the attribute reflecting part 42 reflects attribute data of the respective advertising objects on those of the corresponding characters. Thus, a plurality of three-dimensional advertising characters are reproduced, so that a user can virtually experience a plurality of advertising objects together in one game through the three-dimensional advertising characters in a three-dimensional virtual space.

The story development control part 60 dynamically sets an evaluation value of each scene showing the three-dimensional advertising characters assigned the advertising objects, in such a manner that the advertising amounts of the advertising objects become close to the advertising ratios, thereby developing a story.

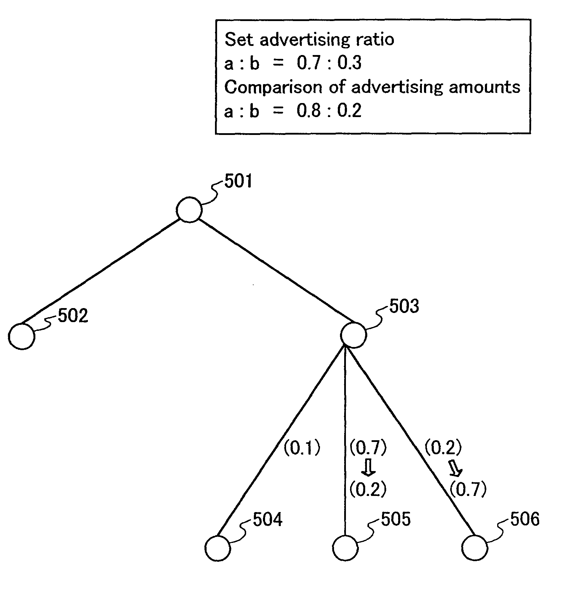

Figure 6 shows the state where evaluation values are dynamically set and changed so that the advertising amounts of the advertising objects become close to the advertising ratios, whereby a story is developed.

It is assumed that advertising objects are car models "a" and "b" and a game including scenes in which a user walking on a virtual street comes across a car is performed. It is also assumed that the advertising ratios of the car models "a" and "b" are 0.7 and 0.3, respectively.

There are nodes 504 to 506 under a node 503. The node 505 represents a scene in which a user comes across the car model "a" that is an advertising object in the development of a story, and the node 506 represents a scene in which a user comes across the car model "b" that is also an advertising object in the development of a story. It is assumed that the evaluation values of the nodes 504, 505, and 506 in a default game story are 0.1, 0.7, and 0.2.

It is assumed that a user is playing a game, and the story has proceeded from the node 501 to the node 503. In the case of not considering an advertising ratio, the story proceeds to the node 505 in accordance with the amount of the evaluation value to obtain a scene in which the user comes across a three-dimensional advertising character of the car model "a". However, according to the advertising system using a three-dimensional interactive game system in Embodiment 2, in the development of the story, the advertising amounts are detected and compared, which indicate how long or how often the car model "a" and the car model "b" have been displayed and advertised until now. In this example, the advertising amounts are detected based on the number of scenes in which the advertising objects have been displayed. Herein, it is assumed that the advertising amounts of the car models "a" and "b" are 0.8 and 0.2, respectively.

Since the advertising ratios of the car models "a" and "b" are 0.7 and 0.3, and the actual advertising amounts of the car models "a" and "b" are 0.8 and 0.2, it is understood that the advertising amount of the car model "a" is slightly excessive in the development of the game story so far. Then, the story development control part 60 sets the node 506 at a higher evaluation value so that the actual advertising amounts of the car models "a" and "b" become close to the desired ratios, i.e., so as to obtain a scene in which a three-dimensional advertising character of the car model "b" appears. For example, the evaluation values of the nodes 504, 505, and 506 are set to be 0.1, 0.2, and 0.7, respectively.

As a result of dynamic setting and change in the evaluation values by the story development control part 60, considering the advertising ratios, the story proceeds to the node 506 in accordance with the amount of the evaluation value to obtain a scene in which a user comes across the three-dimensional advertising character of the car model "b".

Since the story has proceeded to the node 506, the advertising amounts of the car models "a" and "b" of 0.8 and 0.2 become close to the advertising ratios of the car models "a" and "b" of 0.7 and 0.3.

As described above, according to the advertising system using a three-dimensional interactive game system in Embodiment 2, in the case where there are a plurality of advertising objects, the advertising ratios of the respective advertising objects are set, and the evaluation value of each scene in which characters assigned the advertising objects are dynamically set by the story development control part 60 so that the actual advertising amounts of the objects become close to the advertising ratios, whereby the advertising objects can be effectively displayed and advertised to a game user.

### Embodiment 3

According to an advertising system using a three-dimensional interactive game system in Embodiment 3, in addition to a three-dimensional advertising character corresponding to an advertising object, a three-dimensional comparative character for comparative advertising is prepared so that a user can virtually experience advantageous points of the object such as performance by comparing the characters, whereby the object can be effectively displayed and advertised.

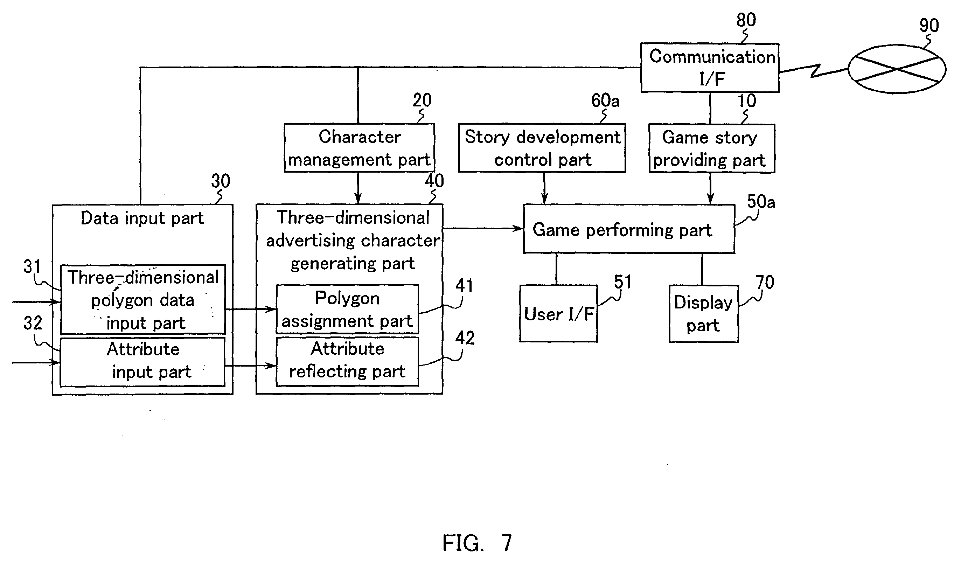

Figure 7 is a block diagram showing a schematic structure of the advertising system using a three-dimensional interactive game system in Embodiment 3 according to the present invention. In actual implementation, the components of the advertising system may be composed of dedicated devices. It may also be possible that processing steps are described as computer software using a CPU, a memory, and the like.

As shown in Figure 7, the advertising system includes a game story providing part 10a, a character management part 20a, a data input part 30a, a three-dimensional polygon data input part 31a, an attribute input part 32a, a three-dimensional advertising character generating part 40a, a polygon assignment part 41a, an attribute reflecting part 42a, a story development control part 60a, a game performing part 50a, a user interface (I/F) 51, a display part 70, a communication interface (I/F) 80, and a network 90. In Figure 7, a CPU, a memory, and various devices required for controlling a computer system are not shown. Each component of the advertising system using a three-dimensional interactive game system may be a dedicated device, or a library describing the processing steps thereof as software.

In Embodiment 3, there are an advertising object and a comparative object, so that each element is adapted to deal with them.

It is assumed that a three-dimensional advertising character and a three-dimensional comparative character that belong to the same category appear in a game story provided by the game story providing part 10a, and the game story contains a comparative advertising scene representing the difference between the three-dimensional advertising character and the three-dimensional comparative character (i.e., the distinctive features or advantageous points of the three-dimensional advertising character).

Furthermore, it is assumed that the character management part 20a manages the three-dimensional advertising character and the comparative character.

The data input part 30a receives an input of a plurality of data containing the advertising object and the comparative object. That is, the three-dimensional polygon data input part 31 is used for inputting data containing three-dimensional polygon data of the advertising object and the comparative object. The attribute input part 32 is used for inputting data containing attribute data of the advertising object and the comparative object. The attribute input part 32 allows data such as a function and performance (i.e., selling points) of the advertising object to be input as attribute data of the advertising object.

The three-dimensional character generating part 40a generates a three-dimensional advertising character and a three-dimensional comparative character. The polygon assignment part 41a assigns three-dimensional polygon data to a three-dimensional advertising character selected with respect to the advertising object and a three-dimensional comparative character selected with respect to the comparative object. The attribute reflecting part 42a reflects attribute data on the advertising character and the comparative character. More specifically, the advertising object is reproduced as the three-dimensional advertising character in a three-dimensional virtual space, and the comparative object is reproduced as the three-dimensional comparative character in the three-dimensional virtual space. A user can experience the selling points (e.g., function and performance) of the advertising object through the reproduced three-dimensional advertising character. In contrast, the three-dimensional comparative character does not have the same selling points (e.g., function and performance) as the advertising object. Therefore, the advantageous points of the advertising object can strongly appeal to a user, based on the difference between the advertising object and the comparative object.

A user can virtually experience advantageous points of the advertising object by comparing the three-dimensional advertising character with the three-dimensional comparative character in the three-dimensional virtual space.

The story development control part 60a dynamically sets an evaluation value of a comparative advertising scene provided by the game story providing part 10a at a higher value. Therefore, a user can experience the advantageous points of the advertising object through a game, whereby the advertising object can be effectively displayed and advertised.

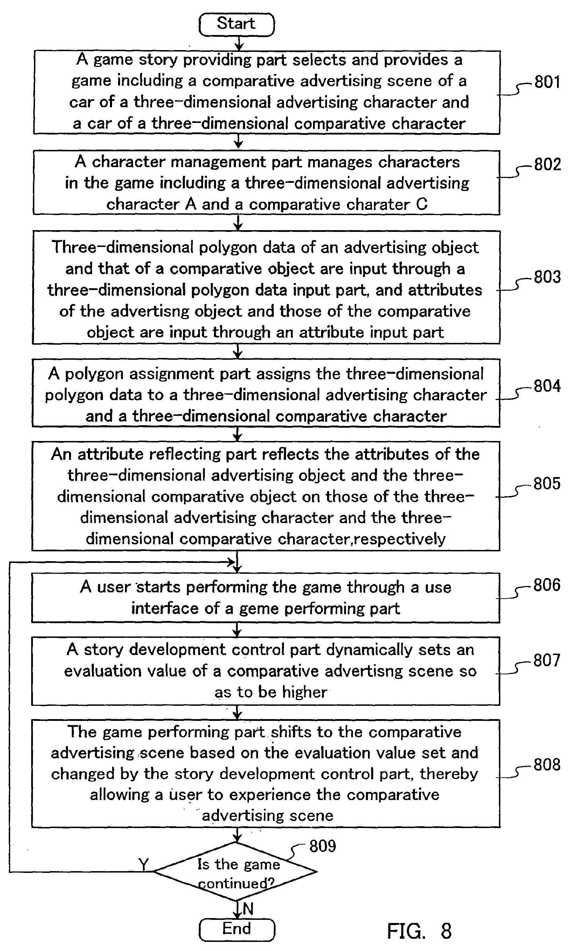

Hereinafter, an example of advertisement comparison in the advertising system in Embodiment 3 will be described with reference to a flow chart in Figure 8. In this example, it is assumed that the advertising object is a car model "a", and the comparative object is a car model "c". It is also assumed that the car model "a" has ABS for improved braking, and the car model "c" does not have ABS.

First, the game story providing part 10a selects and provides a game containing a comparative advertising scene of a three-dimensional advertising character and a three-dimensional comparative character (Operation 801). In this example, it is assumed that the three-dimensional advertising character and the three-dimensional comparative character race against each other in the provided game story. Furthermore, the game story contains a comparative advertising scene in which it is suddenly required to step on the brake in both the car models "a" and "c" and the car models "a" and "c" are manipulated by steering during hard braking.

The character management part 20a manages characters in the game including a three-dimensional advertising character "A" and a comparative character "C" (Operation 802).

Three-dimensional polygon data of the car model "a" to be the advertising object and three-dimensional polygon data of the car model "c" to be the comparative object are input through the three-dimensional polygon data input part 31a, and attributes of the advertising object and those of the comparative object are input through the attribute input part 32a (Operation 803). Herein, the attribute information of the advertising object contains attribute data on the ABS, and attribute information of the comparative object contains attribute data on a standard brake, without containing attribute data on the ABS.

Next, the polygon assignment part 41a assigns three-dimensional polygon data of the advertising object to the three-dimensional advertising character, whereby the outer appearance of the three-dimensional advertising character becomes that of the car model "a"; and the polygon assignment part 41a assigns three-dimensional polygon data of the comparative object to the comparative character, whereby the outer appearance of the comparative character becomes that of the car model "c" (Operation 804). Furthermore, the attribute reflecting part 42a reflects the attributes of the advertising object on those of the three-dimensional advertising character, whereby the brake performance of the three-dimensional advertising character becomes that of the car model "a" equipped with ABS; and the attribute reflecting part 42a reflects the attributes of the comparative object on those of the comparative character, whereby the brake performance of the comparative character becomes that of the car model "c" having standard brake performance (Operation 805). In this manner, the car model "a" that is the advertising object and the car model "c" that is the comparative object are reproduced in a three-dimensional virtual space.

A user starts a game, and the game is performed by the game performing part 50a (Operation 806). For example, a user manipulates a car of the three-dimensional advertising character, and races against a car of the three-dimensional comparative character that runs automatically (or vice versa).

The story development control part 60a dynamically sets an evaluation value of a comparative advertising scene at a higher value (Operation 807). More specifically, the story development control part 60a sets and changes the evaluation value of the comparative advertising scene, in which it is required to suddenly step on the brake because of some obstacle, at a higher value.

The game performing part 50a shifts to the comparative advertising scene based on the evaluation value set and changed by the story development control part 60a, and allows a user to experience the comparative advertising scene (Operation 808). The brake function is performed in both the car of the three-dimensional advertising character and the car of the three-dimensional comparative character. The three-dimensional advertising character "A" is virtually equipped with an ABS function; therefore, a user can virtually experience the state where a steering wheel can be manipulated to some degree while the user suddenly steps on the brake. On the other hand, the comparative character "C" is not equipped with an ABS function; therefore, a user can also experience the state where tires are locked to disable control of a car (even though the user tries to manipulate a steering wheel) when the user suddenly steps on the brake.

As described above, according to the advertising system using a three-dimensional interactive game system according to the present invention, in addition to a three-dimensional advertising character corresponding to an advertising object, a three-dimensional comparative character for comparison of advertisements is prepared so that a user can virtually experience advantageous points of the object such as performance through comparison of advertisements, whereby the object can be effectively displayed and advertised to a user.

### Embodiment 4

According to an advertising system using a three-dimensional interactive game system in Embodiment 4, advertising actions to be performed by a three-dimensional advertising character are accumulated as knowledge, and a scene for advertising an advertising object is autonomously generated, utilizing the knowledge.

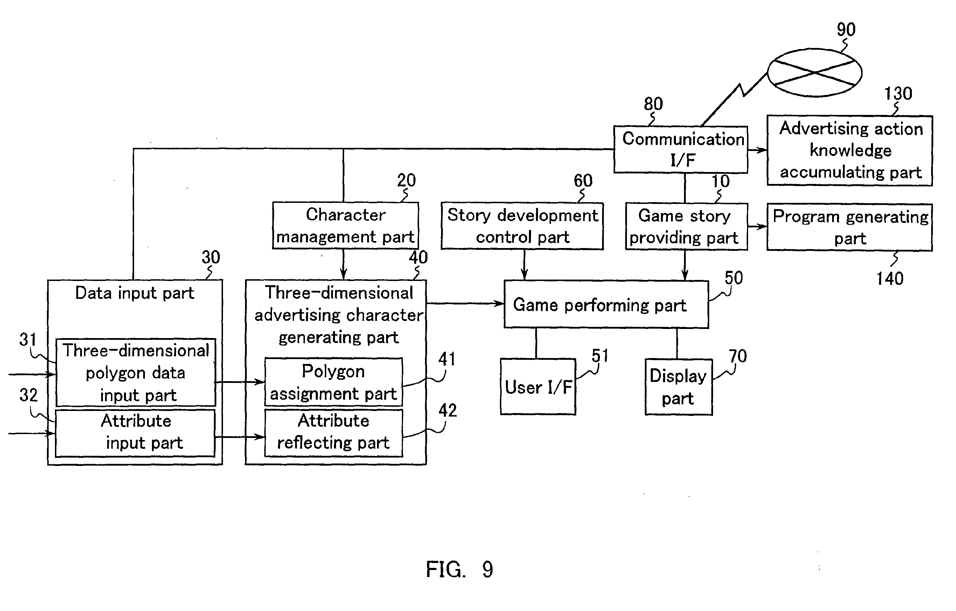

Figure 9 is a block diagram showing a schematic structure of the advertising system using a three-dimensional interactive game system in Embodiment 4. In actual implementation, the components of the advertising system may be composed of dedicated devices. It may also be possible that processing steps are described as computer software using a CPU, a memory, and the like.

As shown in Figure 9, in addition to the game story providing part 10, the character management part 20, the data input part 30, the three-dimensional polygon data input part 31, the attribute input part 32, the three-dimensional advertising character generating part 40, the polygon assignment part 41, the attribute reflecting part 42, the story development control part 60, the game performing part 50, the user interface (I/O) 51, the display part 70, the communication interface (I/O) 80, and the network 90, the advertising system in the present embodiment includes an advertising action knowledge accumulating part 130 and a program generating part 140. In Figure 9, a CPU, a memory, and various devices required for controlling a computer system are not shown. Each component of the advertising system using a three-dimensional interactive game system may be a dedicated device, or a library describing the processing steps thereof as software.

The advertising action knowledge accumulating part 130 accumulates, as knowledge, advertising actions to be performed by a three-dimensional advertising character. The advertising action knowledge accumulating part 130 accumulates knowledge regarding advertising actions given in the past and knowledge regarding previously given advertising actions. In this manner, the advertising system using a three-dimensional interactive game system in Embodiment 4 can learn its own actions regarding advertisement and pattern them.

The program generating part 140 receives an input of action instruction regarding advertisement from a system manager or the like, and autonomously generates a program for actions regarding advertisement, based on the knowledge of the actions regarding advertisement accumulated in the advertising action knowledge accumulating part 130. In order to facilitate autonomous generation of a program, the program generating part 140 is provided with various libraries, and combines program modules with each other based on object-oriented programming, for example.

According to the advertising system using a three-dimensional interactive game system according to the present invention, as described in the above embodiments, the character management part 20 manages a character. Furthermore, an advertising object can be generated as a three-dimensional character by the data input part 30, the three-dimensional advertising character generating part 40, the polygon assignment part 41, and the attribute reflecting part 42. A stage set and a character are separately generated, so that the recombination of the stage set and the character and that of actions can be easily performed. Thus, the advertising system in the present embodiment has a structure suitable for autonomous generation of a program.

Furthermore, an instruction given to the advertising system by an advertising promoter or a system manager may become easy, as the accumulated knowledge in the advertising action knowledge accumulating part 130 and libraries in the program generating part 140 become satisfactory. In other words, the game background or setting are easily changed without needing expert programming.

As described above, according to an advertising system using a three-dimensional interactive game system in Embodiment 4, advertising actions to be performed by a three-dimensional advertising character are accumulated as knowledge, and a scene advertising an advertising object is autonomously generated, utilizing the knowledge.

### Embodiment 5

An advertising system using a three-dimensional interactive game system in Embodiment 5 allows a user to perform a predetermined manipulation through a game and to play a game with a three-dimensional advertising character for a long period of time, using a prize as an incentive, thereby inducing the user to experience the three-dimensional advertising character.

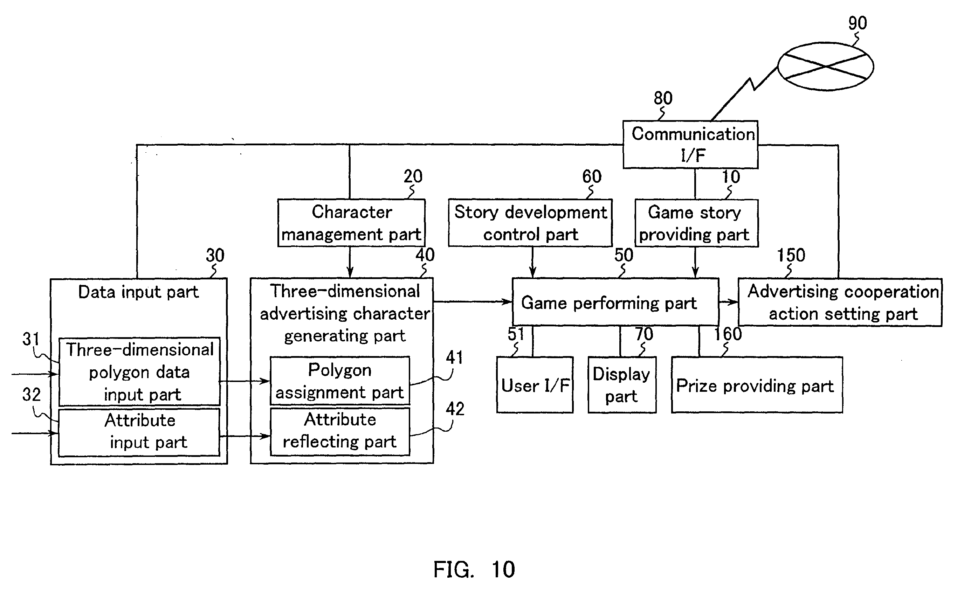

Figure 10 is a block diagram showing a schematic structure of the advertising system using a three-dimensional interactive game system in Embodiment 5 according to the present invention. In actual implementation, the components of the advertising system may be composed of dedicated devices. It may also be possible that processing steps are described as computer software using a CPU, a memory, and the like.

As shown in Figure 10, in addition to the game story providing part 10, the character management part 20, the data input part 30, the three-dimensional polygon data input part 31, the attribute input part 32, the three-dimensional advertising character generating part 40, the polygon assignment part 41, the attribute reflecting part 42, the story development control part 60, the game performing part 50, the user interface (I/F) 51, the display part 70, the communication interface (I/F) 80, and the network 90, the advertising system in the present embodiment includes an advertising cooperation action setting part 150 and a prize providing part 160. In Figure 10, a CPU, a memory, and various devices required for controlling a computer system are not shown. Each component of the advertising system using a three-dimensional interactive game system may be a dedicated device, or a library describing the processing steps thereof as software.

The advertising cooperation action setting part 150 sets a user's predetermined manipulation using a three-dimensional advertising character as an advertising cooperation action. A predetermined manipulation may be the use of performance of an advertising object, which an advertisement provider desires to make appealing, or a time-consuming manipulation or an interesting manipulation for allowing a user to play for a long period of time. It may also be a manipulation for allowing a user to answer questions about his hobbies or family so as to collect information on the user.

The prize providing part 160 determines the amount of a prize in accordance with the performing state of the set advertising cooperation action and gives the prize to a user. That is, the prize providing part 160 gives an incentive for a user to perform an advertising cooperation action. Although there is no particular limit to the content of a prize, it may be a discount ticket for an advertising article, a discount ticket for another article that is not closely related to the advertising article, a small giveaway article, etc.

The story development control part 60 may dynamically adjust the difficulty of an advertising cooperation action so as to allow a user to perform the advertising cooperation action for a long period of time.

Examples of the above will be described. It is assumed that the advertising system is placed in a car dealer, an advertising object is a particular car model "a", and an advertising cooperation action set by the advertising cooperation action setting part 150 is such that a user drives the car model "a" on a three-dimensional virtual street, and chases and catches an artificial creature that is a mascot character of the car model "a". It is also assumed that the prize given by the prize providing part 160 is a doll of the artificial creature.

For example, a game of the advertising system placed in the car dealer employs upbeat music and an artificial creature having cute behavior. On an initial screen, the content of the game is described, and the prize of the game is introduced. A user who is attracted by a game starts it to perform the advertising cooperation action. That is, the user drives the car model "a" on a three-dimensional virtual street, and chases the artificial creature that is an image character of the car model "a".

The story development control part 60 controls the development of a story, considering a game performing time of the user and the like. Furthermore, a frustration factor (the user almost catches the artificial creature but fails) is effective for allowing a game operator to keep interest in the game.

In the case where the user has caught the artificial creature, the prize providing part 160 presents a prize (i.e., an image character doll) to the user for the achievement of the advertising cooperation action. In this case, an exchange ticket may be issued, or a sales attendant may be informed of the fact that the prize will be given to the user.

As described above, the advertising system using a three-dimensional interactive game system in Embodiment 5 allows a user to perform a predetermined manipulation through a game, using a prize as an incentive, thereby inducing the user to experience a three-dimensional advertising character.

### Embodiment 6

An advertising system using a three-dimensional interactive game system in Embodiment 6 detects a user's inclination, and dynamically adjusts the development of a game story in accordance with the user's inclination, thereby performing effective advertisement customized to the user.

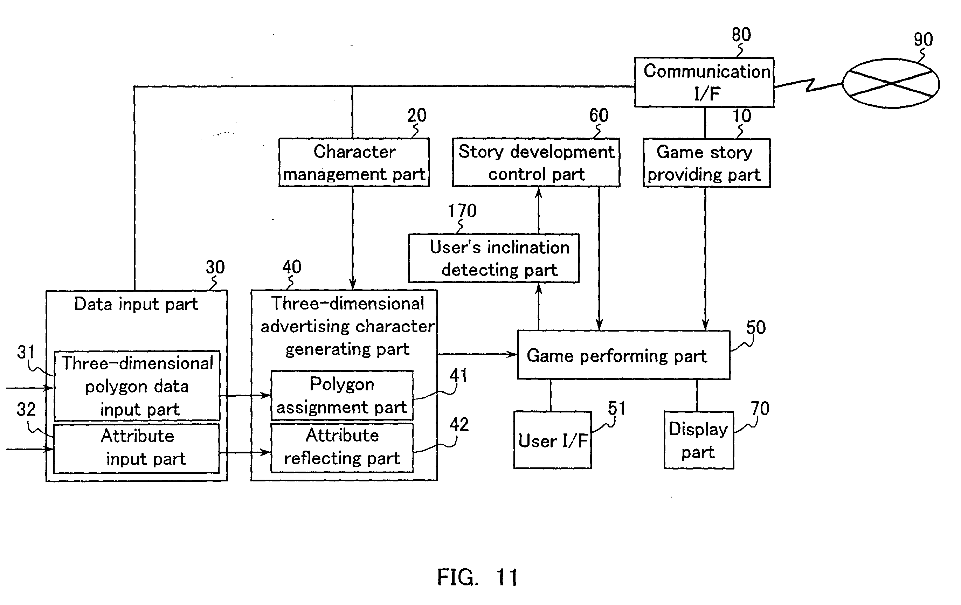

Figure 11 is a block diagram showing a schematic structure of the advertising system using a three-dimensional interactive game system in Embodiment 6 according to the present invention. As shown in Figure 11, in addition to the game story providing part 10, the character management part 20, the data input part 30, the three-dimensional polygon data input part 31, the attribute input part 32, the three-dimensional advertising character generating part 40, the polygon assignment part 41, the attribute reflecting part 42, the story development control part 60, the game performing part 50, the user interface (I/F) 51, the display part 70, the communication interface (I/F) 80, and the network 90, the advertising system in the present embodiment includes a user's inclination detecting part 170.

The user's inclination detecting part 170 detects user's inclination. There is no particular limit to a method for detecting user's inclination. For example, the activity of a user can be presumed based on the user's behavior in a game, the number of mouse clicks, etc., and the skillfulness of a game operation can also be detected. The story development control part 60 changes the development of a story based on user's inclination detected by the user's inclination detecting part 170.

A user can also input his or her inclination. If a user is allowed to input user's inclination, such as preference of the shape of a game character, color preference, and preference of background music, data regarding a character suitable for user's inclination can be input through the data input part 30, and a character is regenerated and customized by the polygon assignment part 41 and the attribute reflecting part 42 of the three-dimensional advertising character 40.

It is also possible for a user to input the level of a game content. The story development control part 60 changes the development of a story and adjust the level of the game content, in accordance with the input level (e.g. style or difficulty) of the game content.

As described above, the advertising system using a three-dimensional interactive game system in Embodiment 6 detects user's inclination, and dynamically adjusts the development of a game story in accordance with the user's inclination, thereby performing effective advertisement customized to the user.

### Embodiment 7

An advertising system using a three-dimensional interactive game system according to the present invention is capable of downloading an interactive game story and data regarding a three-dimensional advertising character through a network medium. Therefore, the advertising system in the present embodiment is provided with a digital image transmitting/receiving apparatus designed for network media. Examples of the network media include a next generation digital TV network and the Internet through which three-dimensional data is transmitted/received. Both cable and radio network media can be used.

### Embodiment 8

An advertising system using a three-dimensional interactive game system according to the present invention can be constructed, using various kinds of computers, by a program that describes processes realizing the above-mentioned structure. Such a program may be downloaded over a network or stored onto a computer-readable recording medium. Examples of the recording medium that stores a program including processes realizing the advertising system include a recording medium 200 in a storage device on the network and a recording medium 205 such as a hard disk and an RAM of a computer, as well as a portable recording medium 201 such as a CD-ROM 202 and a flexible disk 203. In execution, the program is loaded onto the computer 204 and executed on a main memory.

The advertising system using a three-dimensional interactive game system of the present invention displays an advertising article three-dimensionally, allows a user to perform an interactive manipulation close to virtual reality, increase the advertising information amount of the advertising object through a game operation, and allows the user to interactively experience the advertising object in a three-dimensional virtual space. If the advertising system is placed in a shop, the advertising article can be effectively advertised, which leads to the enhancement of service to customers.

The advertising system of the present invention allows a user to enjoy an interactive game as a main purpose, to naturally recognize an advertising object as a game character, and to see and hear the advertising object. Furthermore, the advertising system can dynamically induce the development of a game story so that selling points of the advertising object are emphasized. Thus, the advertising object can be effectively displayed and advertised.

Furthermore, in the case where there are a plurality of advertising objects, the advertising amounts of the respective advertising objects can be set as advertising ratios, whereby each advertising object can be advertised with an appropriate balance.

Furthermore, the advertising system of the present invention allows a user to experience advantageous points of an advertising object in a three-dimensional interactive manner by means of comparative advertisement using a comparative object. Furthermore, if a scene for advertising the advertising object is autonomously generated using knowledge, it is no longer required to give detailed setting and instruction, whereby the advertising system can be efficiently constructed. Furthermore, if a user is allowed to perform an advertising cooperation action through a manipulation of a three-dimensional advertising character, using a prize as an incentive, the user can experience the advertising object assigned to the three-dimensional advertising character.

## Claims

1. A three-dimensional interactive game system, comprising a three-dimensional character, which has predetermined attributes and is assigned a plurality of three-dimensional polygon data, so that the three-dimensional character replaces an object to be displayed as a character in an interactive game,
wherein a user is allowed to perform an interactive manipulation through a user interface, using the three-dimensional character that replaces the object in the interactive game, thereby playing the game.

2. An advertising system using a three-dimensional interactive game system, comprising:
a setting part for setting a three-dimensional advertising character in an interactive game, which has predetermined attributes and is assigned three-dimensional polygon data of an advertising object, as a game character in a three-dimensional virtual space;and
a game performing part for allowing a user to interactively manipulate the three-dimensional advertising character through a user interface,
wherein the advertising object is advertised by allowing the user to virtually experience the advertising object in the three-dimensional virtual space.

3. An advertising system using a three-dimensional interactive game system; comprising:
a game story providing part for, in a case where there are a plurality of selective scenes to be developed after a certain scene, providing an interactive game story in which a next scene is determined based on an evaluation value of the certain scene for evaluating which scene is to be developed next;
a character management part for managing characters appearing in a game;
a three-dimensional polygon data input part for inputting three-dimensional polygon data of an advertising object;
a three-dimensional advertising character generating part for generating a three-dimensional advertising character, provided with a polygon assignment part for assigning the three-dimensional polygon data of the advertising object to a character selected from the characters managed by the character management part;
a story development control part for dynamically setting an evaluation value to be assigned to each scene in a development of a game story; and
a game performing part for performing a game through a user interface,
wherein the story development control part dynamically sets an evaluation value of a scene, in which the three-dimensional advertising character appears, to be higher than an evaluation value of a scene in which the three-dimensional advertising character does not appear, and the scene including the advertising object is preferentially displayed and advertised to a game user.

4. An advertising system using a three-dimensional interactive game system according to claim 3, in which there are a plurality of advertising objects, the advertising system comprising:
an advertising ratio input part for inputting advertising ratios of the respective advertising objects; and
an advertising amount comparing part for detecting advertising amounts of the respective advertising objects and comparing them with each other,
wherein the three-dimensional polygon data input part is used for inputting three-dimensional polygon data of the plurality of advertising objects,
the three-dimensional advertising character generating part assigns the three-dimensional polygon data of the advertising objects to each selected character to generate respective three-dimensional advertising characters,
the advertising amount comparing part compares the advertising amounts of scenes with each other in which the three-dimensional advertising characters appear, and
the story development control part dynamically adjusts evaluation values of the scenes in which the three-dimensional advertising characters appear so that the compared advertising amounts of the advertising objects become close to the advertising ratios.

5. An advertising system using a three-dimensional interactive game system according to claim 3 or 4, further comprising an attribute input part for inputting attributes of the advertising object, the three-dimensional advertising character generating part including an attribute reflecting part for reflecting the input attributes of the advertising object on attributes of the three-dimensional advertising character,
wherein the game user is allowed to virtually experience the attributes of the advertising object.

6. An advertising system using a three-dimensional interactive game system according to claim 5,
wherein a three-dimensional advertising character and a comparative character that belong to the same category appear in the game story provided by the game story providing part, the game story including a comparative advertising scene showing at least one advantageous point of the three-dimensional advertising character, which is a difference between the three-dimensional advertising character and the comparative character,
the three-dimensional polygon data input part is used for inputting three-dimensional polygon data of an advertising object and three-dimensional polygon data of a comparative object,
the attribute input part is used for inputting attributes of the advertising object and attributes of the comparative object,
the character generating part uses the polygon assignment part to assign the three-dimensional polygon data of the advertising object to a character to be a three-dimensional advertising character, and to assign the three-dimensional polygon data of the comparative object to a character to be a three-dimensional comparative character; and the character generating part uses the attribute reflecting part to reflect the input attributes of the advertising object on attributes of the three-dimensional advertising character, and to reflect the input attributes of the comparative object on attributes of the three-dimensional comparative character, and
the story development control part dynamically sets the comparative advertising scene at a higher value, thereby preferentially displaying and advertising the advantageous points of the advertising object to the game user.

7. An advertising system using a three-dimensional interactive game system according to any one of claims 1 to 6, further comprising an advertising action knowledge accumulating part for accumulating an advertising action to be performed by the three-dimensional advertising character as knowledge,
wherein a scene for advertising the advertising object is autonomously generated, using knowledge in the advertising action knowledge accumulating part.

8. An advertising system using a three-dimensional interactive game system according to any one of claims 1 to 7, further comprising:
an advertising cooperation action setting part for setting a predetermined manipulation using the three-dimensional advertising character as an advertising cooperation action; and
a prize providing part for determining an amount of a prize to be provided, in accordance with a performing state of the set advertising cooperation action, and providing the prize,
wherein the prize is used as an incentive to allow a user to perform the advertising cooperation action through a manipulation of the three-dimensional advertising character, and to allow the user to experience the advertising object assigned to the three-dimensional advertising character.

9. An advertising system using a three-dimensional interactive game system according to any one of claims 1 to 8, further comprising a user's inclination detecting part for detecting a user's inclination such as ability or preference,
wherein the story development control part dynamically changes a development of a story based on the detected user's inclination.

10. An advertising system using a three-dimensional interactive game system according to claims 1 to 9, further comprising a digital image transmitting/ receiving apparatus that downloads the interactive game story and data regarding the three-dimensional advertising character through a network medium.

11. A program for realizing a three-dimensional interactive game system, the program comprising program code means carrying out the functions of:
generating a three-dimensional character, which has predetermined attributes and is assigned a plurality of three-dimensional polygon data, so that the three-dimensional character replaces an object to be displayed as a character in an interactive game; and
allowing a user to perform an interactive manipulation through a user interface, using the three-dimensional character that replaces the object in the interactive game, thereby performing the game.

12. A program for realizing an advertising system using a three-dimensional interactive game system that effectively displays and advertises an advertising object to a game user, the program comprising program code means for:
a game story providing operation for, in a case where there are plurality of selective scenes to be developed after a certain scene, providing an interactive game story in which a next scene is determined based on an evaluation value of the certain scene for evaluating which scene is to be developed next;
a character management operation for managing characters appearing in a game;
a three-dimensional polygon data input operation for inputting three-dimensional polygon data of an advertising object;
a three-dimensional advertising character generating operation for generating a three-dimensional advertising character, including a polygon assignment operation for assigning the three-dimensional polygon data of the advertising object to a character selected from the characters managed in the character management operation;
a story development control operation for dynamically setting an evaluation value to be assigned to each scene in a development of a game story; and
a game performing operation for performing a game through a user interface,
wherein the story development control operation dynamically sets an evaluation value of a scene, in which the three-dimensional advertising character appears, to be higher than an evaluation value of a scene in which the three-dimensional advertising character does not appear, and the scene including the advertising object is preferentially displayed and advertised to a game user.

13. A computer-readable recording medium storing the program of claim 11 or 12.
